# EUROPÄISCHE PATENTANMELDUNG

(11) **EP 4 585 397 A2**
(43) Veröffentlichungstag der Anmeldung: **16.07.2025**
(21) Anmeldenummer: 25151474.1
(22) Anmeldetag: 13.01.2025
(51) Int. Cl.: B29C 49/78, B29C 49/06, B29C 49/12, B29C 49/64, B29K 67/00, B29L 31/00, G03B 17/00

(54) **VORRICHTUNG UND VERFAHREN ZUM BEHANDELN VON KUNSTSTOFFVORFORMLINGEN MIT TEMPERATURERFASSUNG**

(30) Priorität: 15.01.2024 DE 102024101052
(71) Anmelder: Krones AG, 93073 Neutraubling (DE)
(72) Erfinder: Zoelfl, Markus, 93073 Neutraubling (DE); Peter, Daniel, 93073 Neutraubling (DE)
(74) Vertreter: Bittner, Bernhard

(57) **Zusammenfassung**

Vorrichtung zum Behandeln von Kunststoffvorformlingen mit einer Erwärmungseinrichtung welche dazu geeignet und bestimmt ist, die Kunststoffvorformlinge zu erwärmen, wobei die Erwärmungseinrichtung eine Transporteinrichtung aufweist, welche die Kunststoffvorformlinge entlang eines vorgegebenen Transportpfads transportiert sowie wenigstens eine Heizeinrichtung, welche dazu geeignet und bestimmt ist, die transportierten Kunststoffvorformlinge zu erwärmen und mit einer Umformungseinrichtung, welche der Erwärmungseinrichtung in einer Transportrichtung der Kunststoffvorformlinge nachgeordnet ist, und welche dazu geeignet und bestimmt ist, die erwärmten Kunststoffvorformlinge zu Kunststoffbehältnissen umzuformen, wobei die Vorrichtung wenigstens eine Temperaturerfassungseinrichtung aufweist, welche dazu geeignet und bestimmt ist, eine Temperatur der von der Erwärmungseinrichtung erwärmten Kunststoffvorformlinge zu erfassen, wobei die Temperatur der Kunststoffvorformlinge wenigstens in einer Längsrichtung der Kunststoffvorformlinge ortsaufgelöst erfassbar ist, dadurch gekennzeichnet, dass die Temperaturerfassungseinrichtung eine Bildaufnahmeeinrichtung aufweist, welche dazu geeignet und bestimmt ist, ein ortsaufgelöstes Bild der Kunststoffvorformlinge aufzunehmen, wobei die Bildaufnahmeeinrichtung konfigurierbar ist und bevorzugt unter Berücksichtigung wenigstens eines für die zu inspizierenden Kunststoffvorformlinge charakteristischen Parameters konfigurierbar ist.

## Beschreibung

Die vorliegende Erfindung bezieht sich auf eine Vorrichtung und ein Verfahren zum Behandeln von Kunststoffvorformlingen. Derartige Vorrichtungen und Verfahren sind aus dem Stand der Technik seit langem bekannt. Üblicherweise werden Kunststoffvorformlinge in einem Ofen erwärmt, um dann in diesem erwärmten Zustand zu Kunststoffbehältnissen und insbesondere Kunststoffflaschen umgeformt zu werden.

Die Temperatur der Kunststoffvorformlinge am Ausgang des Ofens ist dabei ein wesentlicher Parameter für die Herstellung bzw. den Umformungsprozess. Aus dem internen Stand der Technik der Anmelderin ist es bekannt, an dem Ofen oder am Ausgang des Ofens Pyrometer einzusetzen, welche die Temperatur der Kunststoffvorformlinge erfassen. Dabei ist der Abstand der einzelnen Messpunkte fest vorgegeben, da die Pyrometer am Rahmen befestigt sind. Es kann also vorkommen, dass bei einem sehr kleinen bzw. kurzen Kunststoffvorformling die untersten Pyrometer keine Werte erfassen können, welche für die Kunststoffvorformlinge charakteristisch sind.

Aus der DE 10 2016 118 670 B1 ist es bekannt, dass nach der Herstellung von Kunststoffvorformlingen mittels einer Wärmebildkamera die Temperaturverteilung an der Oberfläche der Kunststoffvorformlinge ermittelt wird.

Die WO 20211071677 A1 beschreibt, dass mit einem Detektor bestimmte wesentliche Bereiche ermittelt werden.

Die EP 4 051 484 B1 beschreibt, dass die Qualität eines Behältnisses basierend auf einem Wärmebild ermittelt wird. Dabei wird geprüft, ob ein Wert einer kritischen Zone unterhalb eines Schwellenwerts liegt.

Der vorliegenden Erfindung liegt die Aufgabe zugrunde, eine Temperaturüberwachung derartiger Kunststoffvorformlinge zu verbessern. Dies wird erfindungsgemäß durch die Gegenstände der unabhängigen Patentansprüche erreicht.

Vorteilhafte Ausführungsformen sind Gegenstand der Unteransprüche.

Eine erfindungsgemäße Vorrichtung zum Behandeln von Kunststoffvorformlingen weist eine Erwärmungseinrichtung auf, welche dazu geeignet und bestimmt ist, die Kunststoffvorformlinge zu erwärmen, wobei die Erwärmungseinrichtung eine Transporteinrichtung aufweist, welche die Kunststoffvorformlinge entlang eines vorgegebenen Transportpfads transportiert, sowie wenigstens eine Heizeinrichtung, welche dazu geeignet und bestimmt ist, die von der Transporteinrichtung transportieren Kunststoffvorformlinge zu erwärmen.

Weiterhin weist die Vorrichtung eine Umformungseinrichtung auf, welche der Erwärmungseinrichtung in einer Transportrichtung der Kunststoffvorformlinge nachgeordnet ist und welche dazu geeignet und bestimmt ist, die von der Erwärmungseinrichtung erwärmten Kunststoffvorformlinge zu Kunststoffbehältnissen umzuformen, wobei die Vorrichtung wenigstens eine Temperaturerfassungseinrichtung aufweist, welche dazu geeignet und bestimmt ist, eine Temperatur der von der Erwärmungseinrichtung erwärmten oder zur wärmenden Kunststoffvorformlinge zu erfassen, wobei die Temperatur der Kunststoffvorformlinge wenigstens in einer Längsrichtung und/oder in einer Umfangsrichtung der Kunststoffvorformlinge ortsaufgelöst erfassbar ist.

Erfindungsgemäß weist die Temperaturerfassungseinrichtung eine Bildaufnahmeeinrichtung auf, welche dazu geeignet und bestimmt ist, wenigstens ein ortsaufgelöstes Bild der Kunststoffvorformlinge oder eines Abschnitts der Kunststoffvorformlinge aufzunehmen, wobei die Bildaufnahmeeinrichtung konfigurierbar ist, und bevorzugt unter Berücksichtigung wenigstens eines für die zu inspizierenden Kunststoffvorformlinge charakteristischen Parameters konfigurierbar ist.

Es wird daher vorgeschlagen, dass anstelle der im Stand der Technik vorgesehenen Pyrometer eine Bildaufnahmeeinrichtung und insbesondere eine Wärmebildkamera verwendet wird. Besonders bevorzugt ist die Bildaufnahmeeinrichtung dazu geeignet und bestimmt, Strahlung im infraroten Wellenlängenbereich zu erfassen.

Innerhalb des Bildbereichs der Wärmebildkamera können bevorzugt Bereiche oder Ausschnitte konfiguriert und/oder ausgewählt werden, die bevorzugt wiederum den bisher verwendeten beispielsweise neun Positionen eines Pyrometersystems entsprechen. Insbesondere können aus einem von der Bildaufnahmeeinrichtung aufgenommenen Bild Bereiche ausgewählt werden, die im Rahmen einer Bildauswertung ausgewertet werden.

Wie unten genau erläutert, kann es sich bei dem ausgewählten Bereich auch um eine Linie, um einen Bildausschnitt oder um mehrere Bildausschnitte handeln.

Ein wesentlicher Vorteil besteht darin, dass die Bereiche unabhängig von der Positionierung der Bildaufnahmeeinrichtung, beispielsweise einer Kamera, ausgewählt werden können. Im Stand der Technik muss, falls eine Fokussierung auf die tatsächliche Größe des Kunststoffvorformlings stattfinden soll, der zu erfassende Bereich für jedes Kundenobjekt und für jede Maschine separat eingestellt und oder konfiguriert werden.

Besonders bevorzugt handelt es sich bei der Erwärmungseinrichtung um eine Erwärmungseinrichtung, welche die Kunststoffvorformlinge mittels Infrarotstrahlung erwärmt. Es wäre auch möglich, eine Erwärmungseinrichtung zu verwenden, welche die Kunststoffvorformlinge mittels Mikrowellen oder mittels anderer Strahlungsgattungen erwärmt.

Besonders bevorzugt weist die Erwärmungseinrichtung eine Dreheinrichtung auf, welche die Kunststoffvorformlinge während ihrer Erwärmung um deren eigene Längsrichtung dreht. Besonders bevorzugt nimmt die Bildaufnahmeeinrichtung die Bilder während einer Drehung der Kunststoffvorformlinge (bezüglich deren Längsrichtung) auf.

Dabei ist es möglich, dass die Bilder mit einer vorgegebenen Belichtungszeit aufgenommen werden. Diese Belichtungszeit kann dabei so gering sein, dass sich der Kunststoffvorformling während der Belichtungszeit nicht oder praktisch nicht oder nur um einen vernachlässigbaren Winkel dreht. Bevorzugt ist eine Belichtungszeit geringer als 1/50s, bevorzugt geringer als 1/100s, bevorzugt geringer als 1/200s, bevorzugt geringer als 1/400s, bevorzugt geringer als 1/500s, bevorzugt geringer als 1/800s und bevorzugt geringer als 1ms.

Besonders bevorzugt sind die Heizeinrichtungen der Erwärmungseinrichtung stationär angeordnet und bevorzugt werden die Kunststoffvorformlinge an diesen Heizeinrichtungen vorbei transportiert. Bevorzugt weisen die Heizeinrichtungen jeweils eine Vielzahl von Heizstrahlern auf, welche sich in der Transportrichtung der Kunststoffvorformlinge erstrecken.

Bei einer weiteren vorteilhaften Ausführungsformen weist die Transporteinrichtung Halteeinrichtungen zum Halten der Kunststoffvorformlinge auf und insbesondere weist die Transporteinrichtungen Haltedorne zum Halten der Kunststoffvorformlinge auf, welche in die Mündungen der Kunststoffvorformlinge einführbar sind. Bevorzugt transportiert die Erwärmungseinrichtung die Kunststoffvorformlinge mit einem (insbesondere gleichbleibenden) Abstand zueinander. Bevorzugt ist die Transporteinrichtung dazu geeignet und bestimmt, die Kunststoffvorformlinge wenigstens abschnittsweise entlang eines geradlinigen Transportpfadabschnitts zu transportieren.

Besonders bevorzugt, handelt es sich bei der nachgeordneten Umformungseinrichtung um eine Blasmaschine und insbesondere eine Streckblasmaschine. Besonders bevorzugt weist diese Umformungseinrichtung einen bewegbaren und insbesondere drehbaren Träger auf, an dem eine Vielzahl von Umformungsstationen angeordnet ist. Diese Umformungsstationen weisen bevorzugt jeweils Blasformen auf, innerhalb derer die Kunststoffvorformlinge zu den Kunststoffbehältnissen und insbesondere Kunststoffflaschen umformbar sind.

Besonders bevorzugt weist die Vorrichtung eine Auswurfeinrichtung auf, welche dazu geeignet und bestimmt ist, von der Transporteinrichtung oder einer nachgeordneten Transporteinrichtung transportierte Kunststoffvorformlinge aus den Transportpfad der Kunststoffvorformlinge auszuwerfen. Insbesondere handelt es sich hierbei um fehlerhafte Kunststoffvorformlinge bzw. Kunststoffvorformlinge, die von der Temperaturerfassungseinrichtung als fehlerhaft oder als mit einem fehlerhaften Temperaturprofil identifiziert wurden. Insbesondere ist die Auswurfeinrichtung dazu geeignet und bestimmt, Kunststoffvorformlinge in Reaktion auf ein Signal der Temperaturerfassungseinrichtung aus dem Transportpfad der Kunststoffvorformlinge auszuwerfen und/oder auszuschleusen.

Bei einer weiteren bevorzugten Ausführungsform weist die Vorrichtung eine Herstellungsvorrichtung zum Herstellen der Kunststoffvorformlinge auf. Bevorzugt ist diese Herstellungsvorrichtung in der Transportrichtung der Kunststoffvorformlinge vor der Erwärmungseinrichtung angeordnet. Bevorzugt handelt es sich bei der Herstellungseinrichtung um eine Spritzgussmaschine oder um eine injection-compression molding machine.

Bei einer besonders bevorzugten Ausführungsform handelt es sich bei der Bildaufnahmeeinrichtung um eine Kamera und insbesondere eine Wärmebildkamera bzw. eine Infrarotkamera. Dabei ist es möglich, dass diese Kamera stationär angeordnet ist. Es ist jedoch insbesondere bevorzugt, dass die Kamera den Beobachtungsabschnitt, zumindest den auszuwertenden Beobachtungsabschnitt verändern kann. Daneben wäre es auch möglich, dass die Bildaufnahmeeinrichtung bewegbar ist, beispielsweise schwenkbar ist, um eine Bildaufnahme unterschiedlich langer Kunststoffvorformlinge zu erleichtern.

Unter einer konfigurierbaren Bildaufnahmeeinrichtung wird insbesondere verstanden, dass wenigstens ein für die Bildaufnahme und/oder Bildauswertung der von dieser Bildaufnahmeeinrichtung aufgenommenen Bilder charakteristischer Parameter veränderbar ist. So wäre es möglich, dass ein Bildaufnahmebereich der Bildaufnahmeeinrichtung veränderbar ist, beispielsweise ein Zoombereich der Kamera. Es wäre jedoch auch denkbar, dass derjenige Bereich eines aufgenommenen Bildes, der ausgewertet wird, veränderbar ist.

Besonders bevorzugt kann jedoch, wie oben erwähnt, konfiguriert und/oder ausgewählt werden, welcher Abschnitt oder welche Abschnitte des von der Bildaufnahmeeinrichtung aufgenommenen Bildes ausgewertet werden sollen.

Besonders bevorzugt weist die Vorrichtung eine zweite Temperaturerfassungseinrichtung und/oder eine zweite Bildaufnahmeeinrichtung auf, die insbesondere vor der oben genannten ersten Temperatur Erfassungseinrichtung angeordnet ist. Diese zweite Temperaturerfassungseinrichtung und/oder Bildaufnahmeeinrichtung kann dabei beispielsweise wenigstens einen Wert erfassen, der für eine Geometrie der Kunststoffvorformlinge charakteristisch ist.

Unter einer ortsaufgelösten Temperaturfassung wird insbesondere verstanden, dass an wenigstens zwei, bevorzugt wenigstens drei und besonders bevorzugt wenigstens vier unterschiedlichen Punkten oder Bereichen des Kunststoffvorformlings eine bzw. dessen Temperatur erfasst wird. Insbesondere wird in wenigstens zwei Punkten oder Bereichen des Kunststoffvorformlings in dessen Längsrichtung eine Temperatur erfasst. Besonders bevorzugt wird in wenigstens drei, bevorzugt in wenigstens vier, bevorzugt in wenigstens fünf, bevorzugt in wenigstens sechs, bevorzugt in wenigstens sieben, besonders bevorzugt in wenigstens acht Punkten und/oder Bereichen die Temperatur der Kunststoffvorformlinge (oder ein für diese Temperatur charakteristischer Wert) erfasst. Dabei ist es möglich, dass diese Punkte oder Bereiche äquidistant zueinander sind.

Es ist möglich, dass die Temperaturerfassungseinrichtung die Temperatur der Kunststoffvorformlinge quantitativ erfasst, es wäre jedoch auch möglich, dass die Temperatur qualitativ erfasst wird also sich etwa anhand eines aufgenommenen Bildes kältere und wärmere Bereiche des Kunststoffvorformlings ergeben.

Bei einer bevorzugten Ausführungsform weist die Vorrichtung eine Steuerungseinrichtung zum Steuern der Umformungseinrichtung auf und diese Steuerungseinrichtung ist dazu geeignet und bestimmt, die Umformungseinrichtung in Abhängigkeit von einer von der Temperaturerfassungseinrichtung erfassten Temperatur eines Kunststoffvorformlings zu steuern.

Bei dieser Ausgestaltung wird also vorgeschlagen, dass auch der Umformungsprozesses wie etwa ein Blasformprozess in Abhängigkeit von der von der Temperaturerfassungseinrichtung erfassten Temperaturverteilung gesteuert wird. So kann beispielsweise das Beaufschlagen der Kunststoffvorformlinge mit einem gasförmigen Medium, die Bewegung einer Reckstange und dergleichen in Abhängigkeit von der erfassten Temperatur gesteuert werden.

Bei einer weiteren vorteilhaften Ausführungsformen weist die Vorrichtung eine Zuordnungseinrichtung auf, welche dazu geeignet und bestimmt ist, einem bestimmten Kunststoffvorformling, dessen Temperatur gemessen wurde, eine Umformungsstationen zuzuordnen, welche diesen Kunststoffvorformling umformen wird.

Bei einer weiteren vorteilhaften Ausführungsformen ist die Bildaufnahme konfigurierbar und bevorzugt ist die Bildaufnahmeeinrichtung unter Berücksichtigung wenigstens eines für die zu inspizieren Kunststoffvorformlinge charakteristischen Parameters konfigurierbar.

Bei einer bevorzugten Ausführungsform ist dieser charakteristische Parameter aus einer Gruppe von Parametern ausgewählt, welche eine Länge des Kunststoffvorformlings, einen Außenquerschnitt des Kunststoffvorformlings, einen Innenquerschnitt des Kunststoffvorformlings, eine Wandungsdicke des Kunststoffvorformlings, ein Material des Kunststoffvorformlings und dergleichen enthält.

So ist es möglich, dass in einem ersten Schritt Werte ermittelt werden, welche für den oder die Kunststoffvorformlinge charakteristisch sind, wie beispielsweise eine Geometrie, ein Recyclinganteil, ein Gewicht, beim Spritzgießen verwendete Additive und dergleichen. Diese charakteristischen Werte können beispielsweise mit einem vorgeschalteten Kamerasystem oder mit einer vorgeschalteten Kamera oder auch mit der hier beschriebenen Wärmebildkamera bzw. der Bildaufnahmeeinrichtung selbst ermittelt werden.

Bei einer weiteren bevorzugten Ausführungsform weist die Vorrichtung eine Auswerteeinrichtung und insbesondere eine Bildauswerteeinrichtung auf, welche dazu geeignet und bestimmt ist, die von der Bildaufnahmeeinrichtung aufgenommenen Bilder auszuwerten, wobei die Auswerteeinrichtung bevorzugt konfigurierbar ist und insbesondere hinsichtlich eines auszuwertenden Bereichs eines von der Bildaufnahmeeinrichtung aufgenommenen Bildes konfigurierbar ist.

Es kann also eine Bildauswertung stattfinden, und auf Basis des Bildes beispielsweise die Geometrie des Kunststoffvorformlings abgeleitet werden. Alternativ oder zusätzlich ist es jedoch denkbar, dass ein Maschinenbediener die charakteristischen Werte vorab eingibt. In einem zweiten Schritt ist es möglich, die vorab ermittelten charakteristischen Werte an eine Steuereinrichtung weiterzugeben.

Bevorzugt weist die Vorrichtung daher eine Steuereinrichtung auf, welche dazu geeignet und bestimmt ist, die Bildaufnahmeeinrichtung und/oder die Auswertung der von der Bildaufnahmeeinrichtung aufgenommenen Bildern zu steuern.

Die Steuereinrichtung kann dann insbesondere basierend auf den charakteristischen Werten einen zu erfassenden Kunststoffvorformling ermitteln und auswählen, welcher Bereich von dem von der Bilderfassungseinrichtung und insbesondere Bildaufnahmeeinrichtung bzw. Wärmebildkamera aufgenommenen Bildes ausgewertet werden soll. Auch ist es möglich, die Bildaufnahmeeinrichtung selbst anzusteuern, beispielsweise in einen bestimmten Bereich zu zoomen.

Dabei wäre es denkbar, dass die Steuereinrichtung Zugriff auf eine Speichereinrichtung hat, in welcher hinterlegt ist, welche Bereiche bei speziellen charakteristischen Werten (bzw. bei bestimmten Kunststoffvorformlingen) vorteilhaft zu inspizieren sind. Bei der Speichereinrichtung kann sich beispielsweise eine interne Speichereinrichtung handeln.

Es wäre jedoch auch möglich, dass eine Abspeicherung oder ein Abruf einer Speichereinrichtung erfolgt, bei der sich beispielsweise um eine cloud (Big Data) handelt. Dazu ist es möglich, dass diese übergeordnete Speichereinrichtung beispielsweise mit Daten von anderen Maschinen, aber auch von der betreffenden Maschine befüllt wird.

Im Folgenden werden zwei Beispiele gegeben: So kann beispielsweise ein Maschinenbediener bzw. ein Kunde während einer ersten Produktion einen großen Kunststoffvorformling fahren bzw. verarbeiten. Während der Produktion wird dieser Kunststoffvorformling (beispielsweise zwischen dem besagten Ofen und einer Blasformmaschine) mit der Wärmebildkamera inspiziert.

Dabei wird ein vorgegebener Bereich aufgenommen. Will der Bediener umstellen und in einer zweiten Produktion einen kleineren Kunststoffvorformling fahren, wird der Steuereinrichtung und/oder der Bildaufnahmeeinrichtung die Geometrie dieses kleineren Kunststoffvorformlings mitgeteilt und es werden die Bereiche ermittelt, die von der Bildaufnahmeeinrichtung inspiziert werden sollen und/oder diejenigen Anteile der von der Bildaufnahmeeinrichtungen aufgenommenen Bilder, welche ausgewertet werden sollen.

Bei einem zweiten Beispiel fährt ein Kunde oder Bediener während einer ersten Produktion einen Kunststoffvorformling mit einem ersten Recyclinganteil. Nun soll umgestellt werden und in einer zweiten Produktion sollen Kunststoffvorformlinge mit einem zweiten Recyclinganteil verwendet werden. Die Steuereinrichtung kann vorab in der Speichereinrichtung überprüfen, ob bereits ein Kunststoffvorformling mit diesem Recyclinganteil (bei der besagten Maschine oder anderen Maschinen) gefahren wurde. Bei einem Treffer können die hinterlegten Bereiche an die Bildaufnahmeeinrichtung bzw. Wärmebildkamera weitergegeben werden. Bevorzugt kann dann die Bildaufnahme und/oder die Bildauswertung entsprechend gesteuert werden.

Bei einer weiteren vorteilhaften Ausführungsform weist die Vorrichtung eine Regeleinrichtung insbesondere einen Regelkreis auf. So kann insbesondere die Umformungseinrichtung eine Regeleinrichtung aufweisen, welche bei der Regelung der Umformungseinrichtung und insbesondere der einzelnen Umformungsstationen auch die erfassten ortsaufgelösten Temperaturen der Kunststoffvorformlinge berücksichtigt.

Besonders bevorzugt wird die Vorrichtung in Verbindung mit einer durch künstliche intelligenzgesteuerten Umformungseinrichtung verwendet. Dies bedeutet, dass die gemessenen Daten der Bildaufnahmeeinrichtung auch in eine Kl gesteuerte Steuerung und/oder Regelung übernommen werden.

Bei einem weiteren bevorzugten Verfahren oder einer bevorzugten Vorrichtung weist die Erwärmungseinrichtung wenigstens ein Modul auf, welches eine in Umfangsrichtung des Kunststoffvorformlings variierende Erwärmung des oder der Kunststoffvorformlinge ermöglicht. Eine derartige Erwärmung kann hilfreich sein, wenn im Anschluss von einer Umformungseinrichtung Behältnisse erzeugt werden, welche einen von einem abweichenden Querschnitt, beispielsweise einen ovalen Querschnitt aufweisen. In diesem Fall kann die Erfassungseinrichtung in Umfangsrichtung abweichende Wärme oder kalte Zonen des Kunststoffvorformlings erfassen.

Durch die Erfindung wird eine gezielte Inspektion kritischer Bereiche der Kunststoffvorformlinge erreicht. Weiterhin kann eine verbesserte Behältnis Qualität erreicht werden. Daneben ist auch eine schnellere und bessere Maschineneinstellung möglich. Weiterhin ist es möglich, die Ausschussrate zu verringern. Weiterhin bietet die Erfindung den Vorteil eines reduzierten oder minimierten Inbetriebnahmeaufwands.

Bevorzugt ist ein Bildaufnahmeabschnitt des von der Bildaufnahmeeinrichtung aufgenommenen Bildes auswählbar. So kann beispielsweise ein bestimmter Abschnitt des Kunststoffvorformlings in Umfangsrichtung ausgewählt werden oder auch ein bestimmter Längenbereich (und das Bild dieses Bereichs oder Abschnitts ausgewählt werden).

So wäre es beispielsweise möglich, dass lediglich eine Linie oder entlang einer Linie (bezogen auf die Umfangswandung des Kunststoffvorformlings) aufgenommen wird, welche sich parallel zur Längsrichtung des Kunststoffvorformlings erstreckt. Weiterhin wäre es auch möglich, dass ein oder mehrere Bildaufnahmeabschnitte aufgenommen werden, die bevorzugt auch getrennt voneinander sein können.

Bei einer bevorzugten Ausführungsform ist es möglich, dass der Kunststoffvorformling während des Vorwärtstransports 360° abgewickelt wird. Während dieser Bewegung werden bevorzugt im Bildbereich mindestens 4, bevorzugt mindestens 6 und bevorzugt mindestens 8 Aufnahmen getätigt. Damit kann bevorzugt nicht nur die vertikale Temperaturinformation erhalten werden sondern bevorzugt auch eine horizontale Information (letztere kann beispielsweise bei hohem Rezyklatanteil relevant sein).

Dabei können besonders bevorzugt diese Bereiche oder Bildabschnitte unabhängig von der Position der Bildaufnahmeeinrichtung aufgenommen werden.

Bei einer weiteren weist die Vorrichtung eine Erfassungseinrichtung auf, welche dazu geeignet und bestimmt ist, einen für einen Kunststoffvorformling charakteristischen Wert zu erfassen.

Bevorzugt ist dieser Wert aus einer Gruppe von Werten ausgewählt, welche eine Länge des Kunststoffvorformlings, einen Außenquerschnitt des Kunststoffvorformlings, einen Innnquerschnitt des Kunststoffvorformlings, eine Wandungsdicke des Kunststoffvorformlings, ein Material des Kunststoffvorformlings, eine Geometrie des Kunststoffvorformlings, einen Recyclinganteil des Materials des Kunststoffvorformlings, ein Gewicht des Kunststoffvorformlings, das Vorhandensein von Additiven in dem Material des Kunststoffvorformlings, einen Anteil von Additiven in dem Material des Kunststoffvorformlings, die Art der Additive in dem Material des Kunststoffvorformlings und dergleichen enthält.

Dabei kann es sich bei der Erfassungseinrichtung um die Bildaufnahmeeinrichtung selbst handeln. Es kann jedoch eine Erfassungseinrichtung auch in Form einer vorgeschalteten Einrichtung vorgesehen sein, etwa einer weiteren Bildaufnahmeeinrichtung bzw. Kamera. Bevorzugt handelt es sich bei dieser weiteren Bildaufnahmeeinrichtung um eine Bildaufnahmeeinrichtung, welche zur Aufnahme von Bildern im sichtbaren Wellenlängenbereich geeignet und bestimmt ist. Daneben kann die Erfassungseinrichtung auch eine Eingabeeinrichtung sein, mittels derer der Benutzer Daten eingeht.

Bei einer bevorzugten Ausführungsform weist die Vorrichtung eine Steuereinrichtung auf, welche die Bildaufnahmeeinrichtung in Abhängigkeit von dem charakteristischen Wert steuert. Insbesondere wählt die Steuereinrichtung den Abschnitt eines aufgenommenen Bildes aus und/oder steuert die Bildaufnahmeeinrichtung dahingehend, dass diese einen bestimmten Abschnitt des aufgenommenen Bildes auswählt.

Besonders bevorzugt weist die Vorrichtung eine Speichereinrichtung auf, welche dazu geeignet und bestimmt ist, Verknüpfungen zu speichern, welche charakteristischen Werten der Kunststoffvorformlinge Steuergrößen zugeordnet, welche wiederum der Steuereinrichtung zuführbar sind. So kann, wie oben erwähnt, ein neuer Kunststoffvorformling erfasst werden und anhand der Speichereinrichtung geprüft werden, ob diesem bereits bestimmte Werte zum Ansteuern der Bildaufnahmeeinrichtung und/oder der Auswerteeinrichtung zugeordnet sind.

So können beispielsweise in der Speichereinrichtung verschiedene Arten von Kunststoffvorformlingen und deren charakteristische Daten hinterlegt sein, welche bereits von der besagten Maschine in der Vergangenheit gemessen wurden oder welche auch von anderen Maschinen verarbeitet wurden. So kann beispielsweise in der Speichereinrichtung ein Datensatz einer Vielzahl von Kunststoffvorformlingen hinterlegt sein.

Die vorliegende Erfindung ist weiterhin auf eine Temperaturerfassungseinrichtung gerichtet, welche dazu geeignet und bestimmt ist, eine Temperatur von einer Erwärmungseinrichtung erwärmten Kunststoffvorformlingen zu erfassen, wobei die Temperatur der Kunststoffformlinge wenigstens in einer Längsrichtung der Kunststoffvorformlinge ortsaufgelöst erfassbar ist.

Erfindungsgemäß weist die Temperaturerfassungseinrichtung eine Bildaufnahmeeinrichtung auf, welche dazu geeignet und bestimmt ist, ein ortsaufgelöstes Bild der Kunststoffvorformlinge aufzunehmen, wobei die Bildaufnahmeeinrichtung konfigurierbar ist und bevorzugt unter Berücksichtigung wenigstens eines für die zu inspizieren Kunststoffvorformlinge charakteristischen Parameters konfigurierbar ist.

Es wird daher auch unter Bezugnahme auf die Temperaturerfassungseinrichtung vorgeschlagen, dass diese in einer vorgegebenen Weise konfigurierbar ist und insbesondere unter Bezugnahme auf den zu inspizieren Kunststoffvorformling konfigurierbar ist, beispielsweise unter Berücksichtigung von dessen Länge.

Die vorliegende Erfindung bezieht sich weiterhin auf ein Verfahren zum Behandeln von Kunststoffvorformlingen, wobei eine Erwärmungseinrichtung die Kunststoffvorformlinge erwärmt und wobei die Erwärmungseinrichtung eine Transporteinrichtung aufweist, welche die Kunststoffvorformlinge entlang eines vorgegebenen Transportvaters transportiert, sowie wenigstens eine Heizeinrichtung, welche die von der Transporteinrichtung transportierten Kunststoffvorformlinge erwärmt und wobei eine Umformungseinrichtung, welche der Erwärmungseinrichtung in einer Transportrichtung der Kunststoffvorformlinge nachgeordnet ist die von der Erwärmungseinrichtung erwärmten Kunststoffvorformlinge zu Kunststoffbehältnissen umformt, wobei die Vorrichtung wenigstens eine Temperaturerfassungseinrichtung aufweist, welche eine Temperatur der von der Erwärmungseinrichtung erwärmten Kunststoffvorformlinge erfasst, wobei die Temperatur der Kunststoffvorformlinge wenigstens in einer Längsrichtung und/oder einer Umfangsrichtung der Kunststoffvorformlinge ortsaufgelöst erfasst wird.

Erfindungsgemäß weist die Temperaturerfassungseinrichtung eine Bildaufnahmeeinrichtung auf, welche wenigstens ein ortsaufgelöstes Bild der Kunststoffvorformlinge aufnimmt, wobei die Bildaufnahmeeinrichtung konfigurierbar ist und/oder konfiguriert wird und bevorzugt unter Berücksichtigung wenigstens eines für die zu inspizierenden Kunststoffvorformlinge charakteristischen Parameters konfigurierbar ist und/oder konfiguriert wird.

Insbesondere handelt es sich bei der Bild Aufnahmeeinrichtung um eine Wärmebildkamera, welche bevorzugt ein hinsichtlich der Temperatur der Kunststoffvorformlinge ortsaufgelöstes Bild der Kunststoffvorformlinge aufnimmt.

Die vorliegende Erfindung ist weiterhin auf ein Verfahren zum Erfassen einer Temperatur von Kunststoffvorformlingen gerichtet, wobei eine Temperatur Erfassungseinrichtung eine Temperatur von einer Erwärmungseinrichtung erwärmten Kunststoffvorformlinge erfasst und wobei die Temperatur der Kunststoffvorformlinge wenigstens in einer Längsrichtung und/oder einer Umfangsrichtung der Kunststoffvorformlinge Orts aufgelöst erfasst wird.

Erfindungsgemäß weist die Temperaturerfassungseinrichtung eine Bildaufnahmeeinrichtung auf, welche ein ortsaufgelöstes Bild der Kunststoffvorformlinge aufnimmt, wobei die Bildaufnahmeeinrichtung konfiguriert wird und bevorzugt unter Berücksichtigung wenigstens eines für die zu inspizieren Kunststoffvorformlinge charakteristischen Parameters konfiguriert werden.

Bevorzugt weisen die Kunststoffvorformlinge einen Grundkörper und einen an diesem Grundkörper angeordneten Gewindeabschnitt auf. Bevorzugt weisen die Kunststoffvorformlinge einen Tragring auf, an dem die Kunststoffvorformlinge getragen werden können.

Besonders bevorzugt wird das ortsaufgelöste Bild während einer Bewegung des Kunststoffvorformlings erfasst. Besonders bevorzugt wird jedoch das Bild während eines zeitlichen Abschnitts erfasst, in dem sich der Kunststoffvorformlinge nicht oder nicht wesentlich bezüglich seiner Längsrichtung dreht. Alternativ könnte gegen die Bewegungsrichtung gedreht werden um die Bewegung während der Aufnahme zu verringern

Bei einem weiteren bevorzugten Verfahren wird eine Umformungseinrichtung unter Berücksichtigung des aufgenommenen Bildes gesteuert. Bei einer weiteren bevorzugten Ausführsform wird auch die Erwärmungseinrichtung unter Berücksichtigung des aufgenommenen Bildes gesteuert.

Bei einer weiteren bevorzugten Ausführungsform sind sowohl die Umformungseinrichtung als auch die Erwärmungseinrichtung unter Berücksichtigung des wenigstens einen Bildes steuerbar und/oder werden gesteuert.

Bevorzugt sind bei der Steuerung der Umformungseinrichtung und/oder der Erwärmungseinrichtung weitere Parameter und/oder Messwerte berücksichtigbar. So können beispielsweise die Messwerte einer Lichttransmissionsmessung am Ende der Umformungseinrichtung berücksichtigt werden. Auch können Umgebungsparameter wie eine Umgebungstemperatur oder eine Luftfeuchtigkeit berücksichtigt werden.

Bei einem weiteren bevorzugten Verfahren wird wenigstens ein für eine physikalische Eigenschaft des oder der Kunststoffvorformlinge charakteristischer Wert erfasst und bevorzugt wird die Bildaufnahmeeinrichtung unter Berücksichtigung dieses Wertes gesteuert. Dabei kann es sich beispielsweise um eine geometrische Eigenschaft des Kunststoffvorformlings oder der Kunststoffvorformlinge (wie etwa dessen Länge), wie oben erläutert, handeln.

Besonders bevorzugt wird wenigstens ein Bereich des von der Bildaufnahmeeinrichtung erfassten Bildes eines Kunststoffvorformlings ausgewählt und/oder ausgewertet. Bevorzugt wird nur ein Teilbereich dieses Bildes ausgewertet.

Insbesondere erfolgt eine Wärmeauswertung des oder der Kunststoffvorformlinge in Abhängigkeit von dem ausgewählten Bild. Dabei wird insbesondere ein Bild oder ein Bildabschnitt in Abhängigkeit von der physikalischen Eigenschaft ausgewählt. So kann beispielsweise, wenn eine bestimmte Länge des Kunststoffvorformlings erfasst wird, in Abhängigkeit von dieser erfassten Länge der Bildabschnitt ausgewählt werden.

Weitere Vorteile und Ausführungsformen ergeben sich aus den beigefügten Zeichnungen:
Darin zeigen:
- Fig. 1: eine schematische Darstellung einer erfindungsgemäßen Vorrichtung;
- Fig. 2: eine Darstellung einer ersten betrieblichen Situation;
- Fig. 3: eine Darstellung einer zweiten betrieblichen Situation; und
- Fig. 4: eine Darstellung einer dritten betrieblichen Situation.

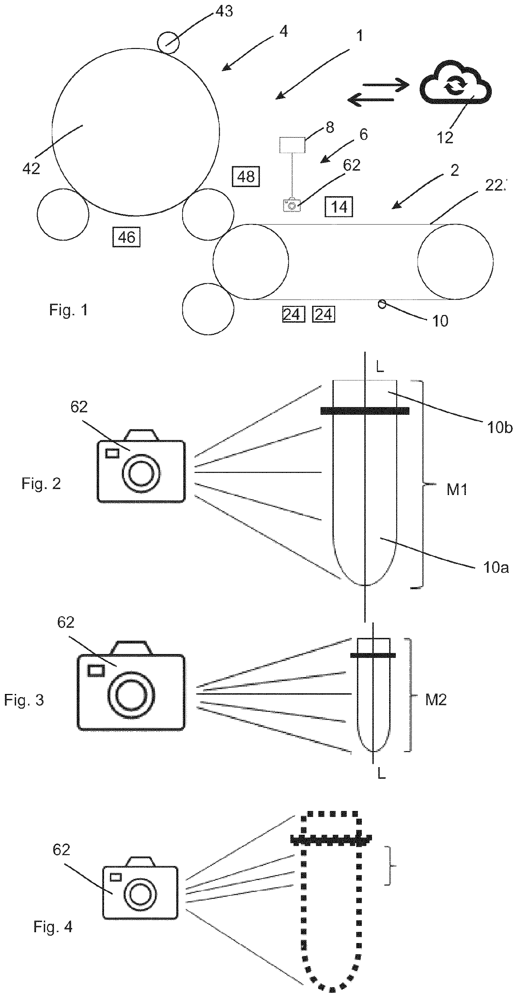

Fig 1 zeigt eine schematische Darstellung einer erfindungsgemäßen Vorrichtung 1. Diese weist eine Erwärmungseinrichtung 2, hier in Form eines Infrarotofens auf, welche zum Erwärmen der Kunststoffvorformlinge 10 dient.

Zu diesem Zweck weist die Erwärmungseinrichtung 2 eine Transporteinrichtung 22 auf, welche dazu dient, die Kunststoffvorformling vereinzelt an Heizeinrichtungen 24 vorbei zu transportieren. Diese Heizeinrichtungen sind bevorzugt stationär angeordnet.

Das Bezugszeichen 4 kennzeichnet eine Umformungseinrichtung zum Umformen der erwärmten Kunststoffvorformlinge zu Kunststoffbehältnissen und insbesondere Kunststoffflaschen. Diese Umformungseinrichtung 4 weist eine Transporteinrichtung 42 wie ein Blasrad auf, an dem eine Vielzahl von Umformungsstationen 43 (nur eine gezeigt) angeordnet ist.

Diese Umformungsstationen weisen jeweils Blasformen auf, in deren Inneren die Kunststoffvorformlinge durch Beaufschlagung mit einem fließfähigen Medium und insbesondere mit Blasluft zu den Kunststoffflaschen expandiert werden. Weiterhin weisen bevorzugt die Umformungsstationen jeweils Reckstangen auf, welche in die Kunststoffvorformlinge einführbar sind, um diese in deren Längsrichtung zu dehnen. Daneben weisen bevorzugt die Umformungsstationen jeweils Ventileinrichtungen auf, welche eine Beaufschlagung der Kunststoffvorformlinge mit unterschiedlichen Druckstufen ermöglichen.

Das Bezugszeichen 46 kennzeichnet eine Steuerungseinrichtung zum Steuern der Umformungseinrichtung 4. Bevorzugt ermöglicht diese Steuerungseinrichtung eine Steuerung der einzelnen Umformungsstationen 43 und/oder des Umformungsvorgangs. So ist es möglich, dass die Beaufschlagung der Kunststoffvorformlinge mit dem fließfähigen Medium gesteuert wird. Daneben ist es aber auch möglich, dass die Bewegung der erwähnten Reckstangen gesteuert wird bzw. steuerbar ist.

Das Bezugszeichen 6 kennzeichnet in seiner Gesamtheit eine Temperaturerfassungseinrichtung welche dazu geeignet und bestimmt ist, die Temperatur der von der Erwärmungseinrichtung erwärmten Kunststoffvorformlinge zu erfassen. Bevorzugt ist dabei diese Temperaturerfassung derart ausgebildet, dass sie die Temperatur jedes einzelnen Kunststoffvorformlings messen und/oder erfassen kann.

Die Temperaturerfassungseinrichtung weist eine Bildaufnahmeeinrichtung 62, beispielsweise in Form einer Wärmebildkamera auf, welche geeignet ist, ein Wärmebild der Kunststoffvorformlinge aufzunehmen.

Das Bezugszeichen 8 kennzeichnet eine Auswerteeinrichtung, welche dazu geeignet ist, die von der Bildaufnahmeeinrichtung aufgenommenen Bilder auszuwerten. Dabei ist bevorzugt die Bildaufnahmeeinrichtung und/oder die Auswerteeinrichtung konfigurierbar. So kann etwa konfiguriert und oder gesteuert werden, welcher Teil des von der Bildaufnahmeeinrichtung aufgenommenen Bildes ausgewertet werden soll.

Weiterhin ist bevorzugt eine Steuerungseinrichtung vorgesehen, welche die Bildaufnahme durch die Bildaufnahmeeinrichtung 62 und/oder die Bildauswertung durch die Auswerteeinrichtung 8 steuert.

Das Bezugszeichen 48 kennzeichnet schematisch eine Zuordnungseinrichtung, welche den von der Bildaufnahmeeinrichtung 62 aufgenommenen Bildern diejenigen Umformungsstationen 43 zuordnet, welche denjenigen Kunststoffvorformlingen, deren Temperatur erfasst wurde diejenigen Umformungsstationen zuordnet, welche die betreffenden Kunststoffvorformlinge umformen werden. Auf diese Weise ist eine individuelle Umformung der Kunststoffvorformlinge in Abhängigkeit von deren Temperaturprofil möglich.

Das Bezugszeichen 14 kennzeichnet eine weitere Erfassungseinrichtung, welche bevorzugt vor der Temperaturerfassungseinrichtung 6 angeordnet ist, und welche dazu dient, die Kunststoffvorformlinge zu erfassen und beispielsweise deren geometrische Gestalt zu erfassen. Bevorzugt weist diese weitere Erfassungseinrichtung ebenfalls eine Bildaufnahmeeinrichtung auf, welche dazu geeignet und bestimmt ist, ein ortsaufgelöstes Bild der einzelnen transportierten Kunststoffvorformlinge aufzunehmen.

Bevorzugt ist diese weitere Erfassungseinrichtung 14 dazu geeignet und bestimmt, wenigstens einen Wert auszugeben, der für die transportierten Kunststoffvorformlinge charakteristisch ist.

Bevorzugt wird die Bildaufnahme durch die Bildaufnahmeeinrichtung und/oder die Auswertung der aufgenommenen Bilder auch durch die von der Erfassungseinrichtung ausgegebenen Werten gesteuert.

Das Bezugszeichen 12 kennzeichnet eine Speichereinrichtung, in der Referenzdaten abgelegt sind, beispielsweise Referenzdaten bezüglich der zu verarbeitenden Kunststoffvorformlingen.

Falls ein Kunststoffvorformling erfasst wird, kann geprüft werden, ob dieser mit einem in der Speichereinrichtung 12 abgelegten Kunststoffvorformling übereinstimmt. In diesem Fall kann die Auswerteeinrichtung 8 angewiesen werden, nur einen bestimmten Bildbereich auszuwerten oder die Bildaufnahmeeinrichtung, einen bestimmten Bereich aufzunehmen.

Fig. 2 zeigt eine erste Situation der Temperaturerfassung. Hier wird die Temperatur eines ersten Kunststoffvorformlings gemessen, der eine erste größere Länge M1 aufweist. Das Bezugszeichen L kennzeichnet die Längsrichtung der Kunststoffvorformlinge. Das Bezugszeichen 10a kennzeichnet einen (zu erwärmenden) Grundkörper des Kunststoffvorformlings und das Bezugszeichen 10b einen (nicht zu erwärmenden) Mündungsbereich der Kunststoffvorformlinge.

Die Bildaufnahmeeinrichtung 62 (und ggfs. die Auswerteeinrichtung) werden derart angesteuert, dass die Temperatur des Kunststoffvorformlings über seine gesamte Länge hinweg aufgenommen und/oder ausgewertet wird.

Fig. 3 zeigt eine weitere Messsituation. Hier ist der Kunststoffvorformling deutlich kürzer und erstreckt sich lediglich über die Länge M2. Entsprechend wird auch die Bildauswertung und/oder die Bildaufnahme auf den entsprechenden kürzeren Bereich des Kunststoffvorformlings erstreckt.

Bei der in Fig. 4 gezeigten Situation wird ein Kunststoffvorformling verarbeitet, der aus einem Kunststoffmaterial mit Recyclingmaterialanteil hergestellt ist (was durch die gestrichelten Linien angedeutet ist). Auch in diesem Fall kann die Temperaturerfassung angepasst werden. So kann beispielsweise die Temperatur in besserer Auflösung direkt unterhalb des Tragrings des Kunststoffvorformlings erfasst werden.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Vorrichtung (1) zum Behandeln von Kunststoffvorformlingen (10) mit einer Erwärmungseinrichtung (2) welche dazu geeignet und bestimmt ist, die Kunststoffvorformlinge (10) zu erwärmen, wobei die Erwärmungseinrichtung (2) eine Transporteinrichtung (22) aufweist, welche die Kunststoffvorformlinge entlang eines vorgegebenen Transportpfads transportiert sowie wenigstens eine Heizeinrichtung (24), welche dazu geeignet und bestimmt ist, die von der Transporteinrichtung (22) transportierten Kunststoffvorformlinge zu erwärmen und mit einer Umformungseinrichtung (4), welche der Erwärmungseinrichtung in einer Transportrichtung der Kunststoffvorformlinge (10) nachgeordnet ist, und welche dazu geeignet und bestimmt ist, die von der Erwärmungseinrichtung (2) erwärmten Kunststoffvorformlinge zu Kunststoffbehältnissen umzuformen, wobei die Vorrichtung wenigstens eine Temperaturerfassungseinrichtung (6) aufweist, welche dazu geeignet und bestimmt ist, eine Temperatur der von der Erwärmungseinrichtung (2) erwärmten Kunststoffvorformlinge (10) zu erfassen, wobei die Temperatur der Kunststoffvorformlinge (6) wenigstens in einer Längsrichtung (L) und/oder in einer Umfangsrichtung der Kunststoffvorformlinge ortsaufgelöst erfassbar ist,
**dadurch gekennzeichnet, dass**
die Temperaturerfassungseinrichtung eine Bildaufnahmeeinrichtung (62) aufweist, welche dazu geeignet und bestimmt ist, ein ortsaufgelöstes Bild der Kunststoffvorformlinge (10) aufzunehmen, wobei die Bildaufnahmeeinrichtung (62) konfigurierbar ist und bevorzugt unter Berücksichtigung wenigstens eines für die zu inspizierenden Kunststoffvorformlinge charakteristischen Parameters konfigurierbar ist.

2. Vorrichtung (1) nach Anspruch 1,
**dadurch gekennzeichnet, dass**
die Vorrichtung (1) eine Steuerungseinrichtung (46) zum Steuern der Umformungseinrichtung aufweist und diese Steuerungseinrichtung (46) dazu geeignet und bestimmt ist, die Umformungseinrichtung (4) in Abhängigkeit von einer von der Temperaturerfassungseinrichtung erfassten Temperatur eines Kunststoffvorformlings (10) zu steuern.

3. Vorrichtung (1) nach den vorangegangenen Ansprüchen,
**dadurch gekennzeichnet, dass**
der charakteristische Parameter aus einer Gruppe von Parametern ausgewählt ist, welche eine Länge des Kunststoffvorformlings, einen Außenquerschnitt des Kunststoffvorformlings, einen Innenquerschnitt des Kunststoffvorformlings, eine Wandungsdicke des Kunststoffvorformlings, ein Material und/oder eine Materialzusammensetzung des Kunststoffvorformlings, eine Geometrie des Kunststoffvorformlings (10), einen Recyclinganteil des Materials des Kunststoffvorformlings (10), ein Gewicht des Kunststoffvorformlings (10), das Vorhandensein von Additiven in dem Material des Kunststoffvorformlings (10), ein Anteil von Additiven in dem Material des Kunststoffvorformlings (10) die Art der Additive in dem Material des Kunststoffvorformlings (10) und dergleichen enthält.

4. Vorrichtung (1) nach den vorangegangenen Ansprüchen,
**dadurch gekennzeichnet, dass**
die Bildaufnahmeeinrichtung (62) wenigstens eine Wärmebildkamera ist.

5. Vorrichtung (1) nach wenigstens einem der vorangegangenen Ansprüche,
**dadurch gekennzeichnet, dass**
die Vorrichtung (1) eine Auswerteeinrichtung (8) aufweist, welche dazu geeignet und bestimmt ist, die von der Bildaufnahmeeinrichtung (62) aufgenommenen Bilder auszuwerten, wobei die Auswerteeinrichtung (8) bevorzugt konfigurierbar ist und insbesondere hinsichtlich eines auszuwertenden Bereichs eines von der Bildaufnahmeeinrichtung (62) aufgenommenen Bildes konfigurierbar ist.

6. Vorrichtung (1) nach wenigstens einem der vorangegangenen Ansprüche,
**dadurch gekennzeichnet, dass**
ein Bildaufnahmeabschnitt des von der Bildaufnahmeeinrichtung aufgenommenen Bildes auswählbar ist.

7. Vorrichtung (1) nach wenigstens einem der vorangegangenen Ansprüche,
**dadurch gekennzeichnet, dass**
die Vorrichtung (1) eine Erfassungseinrichtung (14) aufweist, welche dazu geeignet und bestimmt ist, wenigstens den für einen Kunststoffvorformling (10) charakteristischen Parameter zu erfassen, wobei dieser Wert bevorzugt aus einer Gruppe von Werten ausgewählt ist, welche eine welche eine Länge des Kunststoffvorformlings, einen Außenquerschnitt des Kunststoffvorformlings (10), einen Innenquerschnitt des Kunststoffvorformlings (10), eine Wandungsdicke des Kunststoffvorformlings (10), ein Material des Kunststoffvorformlings (10), eine Geometrie des Kunststoffvorformlings (10), einen Recyclinganteil des Materials des Kunststoffvorformlings (10), ein Gewicht des Kunststoffvorformlings (10), das Vorhandensein von Additiven in dem Material des Kunststoffvorformlings (10), ein Anteil von Additiven in dem Material des Kunststoffvorformlings (10) die Art der Additive in dem Material des Kunststoffvorformlings (10) und dergleichen enthält.

8. Vorrichtung (1) nach dem vorangegangenen Anspruch,
**dadurch gekennzeichnet, dass**
die Vorrichtung (1) eine Steuereinrichtung aufweist, welche die Bildaufnahmeeinrichtung und/oder die Auswerteeinrichtung in Abhängigkeit von dem charakteristischen Parameter steuert.

9. Vorrichtung (1) nach wenigstens einem der vorangegangenen Ansprüche,
**dadurch gekennzeichnet, dass**
die Vorrichtung (1) eine Speichereinrichtung aufweist, welche dazu geeignet und bestimmt ist, Verknüpfungen zu speichern, welche charakteristischen Werten der Kunststoffvorformlinge Steuergrößen zuordnet, welche der Steuereinrichtung zuführbar sind.

10. Temperaturerfassungseinrichtung (6), welche dazu geeignet und bestimmt ist, eine Temperatur von von einer Erwärmungseinrichtung erwärmten Kunststoffvorformlingen (10) zu erfassen, wobei die Temperatur der Kunststoffvorformlinge (6) wenigstens in einer Längsrichtung (L) und/oder einer Umfangsrichtung der Kunststoffvorformlinge ortsaufgelöst erfassbar ist,
**dadurch gekennzeichnet, dass**
die Temperaturerfassungseinrichtung eine Bildaufnahmeeinrichtung (62) aufweist, welche dazu geeignet und bestimmt ist, ein ortsaufgelöstes Bild der Kunststoffvorformlinge (10) aufzunehmen wobei die Bildaufnahmeeinrichtung konfigurierbar ist und bevorzugt unter Berücksichtigung wenigstens eines für die zu inspizierenden Kunststoffvorformlinge charakteristischen Parameters konfigurierbar ist.

11. Verfahren zum Behandeln von Kunststoffvorformlingen (10) wobei eine Erwärmungseinrichtung (2) die Kunststoffvorformlinge (10) erwärmt, und wobei die Erwärmungseinrichtung (2) eine Transporteinrichtung (22) aufweist, welche die Kunststoffvorformlinge entlang eines vorgegebenen Transportpfads transportiert sowie wenigstens eine Heizeinrichtung (24), welche die von der Transporteinrichtung (22) transportierten Kunststoffvorformlinge erwärmt wobei eine Umformungseinrichtung (4), welche der Erwärmungseinrichtung in einer Transportrichtung der Kunststoffvorformlinge (10) nachgeordnet ist, die von der Erwärmungseinrichtung (2) erwärmten Kunststoffvorformlinge zu Kunststoffbehältnissen umformt, wobei die Vorrichtung wenigstens eine Temperaturerfassungseinrichtung (6) aufweist, welche eine Temperatur der von der Erwärmungseinrichtung (2) erwärmten Kunststoffvorformlinge (10) erfasst, wobei die Temperatur der Kunststoffvorformlinge (6) wenigstens in einer Längsrichtung (L) und/oder einer Umfangsrichtung der Kunststoffvorformlinge ortsaufgelöst erfasst wird, **dadurch gekennzeichnet, dass**
die Temperaturerfassungseinrichtung eine Bildaufnahmeeinrichtung (62) aufweist, welche wenigstens ein ortsaufgelöstes Bild der Kunststoffvorformlinge (10) aufnimmt.

12. Verfahren zum Erfassen einer Temperatur von Kunststoffvorformlingen, wobei Temperaturerfassungseinrichtung (6) eine Temperatur von von einer Erwärmungseinrichtung erwärmten Kunststoffvorformlingen (10) erfasst und wobei die Temperatur der Kunststoffvorformlinge (6) wenigstens in einer Längsrichtung (L) und/oder einer Umfangsrichtung der Kunststoffvorformlinge ortsaufgelöst erfasst wird,
**dadurch gekennzeichnet, dass**
die Temperaturerfassungseinrichtung eine Bildaufnahmeeinrichtung (62) aufweist, welche ein ortsaufgelöstes Bild der Kunststoffvorformlinge (10) aufnimmt wobei die Bildaufnahmeeinrichtung konfiguriert wird und bevorzugt unter Berücksichtigung wenigstens eines für die zu inspizierenden Kunststoffvorformlinge charakteristischen Parameters konfiguriert wird.

13. Verfahren nach wenigstens einem der vorangegangenen Ansprüche 10 - 11,
**dadurch gekennzeichnet, dass**
wenigstens ein für eine physikalische Eigenschaft des Kunststoffvorformlings charakteristischer Parameter erfasst wird und bevorzugt die Bildaufnahmeeinrichtung und/oder die Auswerteeinrichtung unter Berücksichtigung dieses Wertes gesteuert wird.

14. Verfahren nach wenigstens einem der vorangegangenen Ansprüche 11 - 13,
**dadurch gekennzeichnet, dass**
wenigstens ein Bild des von der Bildaufnahmeeinrichtung erfassten Bildes eines Kunststoffvorformlings ausgewählt wird.
